# EUROPEAN PATENT SPECIFICATION

(11) **EP 2 451 703 B1**
(45) Date of publication and mention of the grant of the patent: **27.04.2016**
(21) Application number: 10731504.6
(22) Date of filing: 05.07.2010
(51) Int. Cl.: B29D 99/00, B29C 70/30, B64C 1/06

(54) **STRINGER**
STRINGER
LISSE

(30) Priority: 10.07.2009 GB 0912015
(43) Date of publication of application: 16.05.2012
(73) Proprietor: Airbus Operations Limited, Bristol BS34 7PA (GB)
(72) Inventor: BORGHINI-LILLI, Matteo, 2129 Hamburg (DE); HADLEY, Paul, Bristol BS99 7AR (GB); PHILLIPS, Nathan, Bristol BS99 7AR (GB)
(74) Representative: Worthington, Richard Easton
(86) International application number: PCT/EP2010/059521
(87) International publication number: WO 2011/003844

(56) References cited:
- EP-A1- 1 840 775
- EP-A1- 1 967 354
- EP-A2- 2 256 031
- WO-A1-2008/019894
- WO-A1-2008/090911
- US-A- 4 331 723
- US-A- 4 606 961
- US-B1- 6 306 239
- Enzo Cosentino ET AL: "Nonlinear Analytical Approach for Preliminary Sizing of Discrete Composite Stringer Terminations", AIAA Journal, vol. 47, no. 3, 1 March 2009 (2009-03-01), pages 606-617, XP055167945, ISSN: 0001-1452, DOI: 10.2514/1.37745

## Description

### FIELD OF THE INVENTION

The present invention relates to a laminated composite stringer having a taper at its termination, and to a method of forming such a stringer.

### BACKGROUND OF THE INVENTION

A panel, such as the skin of an aircraft wing or fuselage, may be reinforced by a series of elongate stringers which run along the length of the panel. The stringer typically comprises a web extending at right angles to the panel, and a flange engaging the panel.

Stiffeners have to be terminated in certain areas due to obstructions so that the panel/stringer structure assumes a flat plate geometry. In the case of an aircraft, stiffeners have to be terminated at, e.g. the wing tips, access holes, etc. At the stringer termination, stress supported by the stringer is transferred into the panel. Stringer terminations therefore cause areas of local stress concentration and the panel and stringer have a tendency to separate in these areas.

To improve resistance to separation of the panel and stringer, the stringer flange may have a widened portion near the termination, a so-called "stringer foot". This may be bolted or otherwise affixed to the panel. Alternatively, or additionally, a finger plate or cover plate may be provided over the stringer foot and bolted to the panel. These measures aid in dispersing the stringer load into the panel but high stress concentrations remain.

The web typically has a taper of reducing height (perpendicular to the panel) near the termination in order to facilitate load transfer from the skin to the stringer, by providing a gradual increase in transverse bending and axial stiffness and relieving local stress concentrations.

WO2008/132498A describes a stringer wherein the web has a taper of reducing height near the termination. EP1566334A describes a stringer wherein the web has two tapered regions of reducing height near the termination separated by a plateau. Another example of prior art is provided by US4606961A.

The fairly basic stringer termination geometries of the prior art have changed little over the years with the movement from metallic to composite stringers. However, these stringer termination geometries do not fully exploit the benefits of constructing stringers from composite materials.

### SUMMARY OF THE INVENTION

A first aspect of the invention provides a laminated composite stringer having a termination at one end in its longitudinal direction, and including a laminated stack of composite structural plies, the stringer having a taper of reducing stack thickness at the stringer termination provided by consecutively terminating the internal plies in the stack towards the stringer termination.

A second aspect of the invention provides a composite structure comprising a panel and the stringer of the first aspect bonded to the panel.

A third aspect of the invention provides an aircraft comprising the composite structure according to the second aspect.

A fourth aspect of the invention provides a method of manufacturing a laminated composite stringer having a termination at one end in its longitudinal direction, and including a laminated stack of composite structural plies, the stringer having a taper of reducing stack thickness at the stringer termination provided by consecutively terminating the internal plies in the stack towards the stringer termination, the method comprising: cutting the composite structural plies to a desired termination profile; and stacking the composite structural plies.

By contrast with the prior art, this allows load to be far more effectively transferred from the stringer into the panel. The load transition is controlled and evenly distributed in a free-flow form instead of having to manage local stress concentrations. For most loading scenarios, the load transition is such that no additional finger plate or cover plies are required, and the size and number of any bolts can be kept to a minimum. The termination design inhibits crack initiation and improves fracture mechanics.

The stringer may have a flange for engaging a panel, and the stack taper may be in the flange. The stack taper in the flange may be in the longitudinal and/or transverse direction. Stress concentrations are most effectively reduced where the flange is tapered in both the longitudinal and transverse directions.

The stringer may have an upstanding web, and the stack taper may be in the web. The web is preferably bifurcated at the termination, and a non-structural filler element may be disposed between "branches" of the bifurcated web.

The flange and web of the stringer may be formed by joining a pair of substantially L-shaped stacks of laminated composite structural plies back-to-back. Due to the limitation of the minimum radius of the composite ply at the corner, a cleft may be formed between the L-shaped stacks, which can be filled with a non-structural filler element.

In addition to the taper of reducing stack thickness, the stringer may also be tapered such that the height of the web, and/or the width of the flange may be tapered at the termination. The width of the flange immediately inboard of the termination may be greater than the width of the flange further inboard of the termination.

The plies may be cut by, for example, a laser or a water jet. Preferably, each ply is cut as soon as it is added to the stack of plies. An automatic tape laying machine may also be used to cut and lay each ply to form the stack.

The plies may be laid such that the first ply is the largest and further, smaller plies are laid on top such that the upper plies terminate before the lower plies to form the taper of reducing stack thickness at the termination. The edges of the internal plies will be exposed as the uppermost ply, laid last, will be the smallest. To protect the edges of the internal plies, a ply covering may be provided over the ply stack. Protecting the ply edges will improve peel resistance.

Alternatively, the first ply may be the smallest and further, larger plies may be laid on top such that the lower plies terminate before the upper plies to form the taper of reducing stack thickness at the termination. The upper plies of this reverse lay-up will protect the edges of the lower plies and the uppermost ply will form a continuous surface. The lowermost ply lies closest to the panel when the stringer is bonded, or otherwise fixed, to the panel. The uppermost ply lies farthest from the panel.

The plies are preferably fibre reinforced laminates pre-impregnated with resin, so called "pre-pregs". Alternatively, the plies may be dry fibre laminates and resin would need to be infused into the laminates after they have been cut and stacked. The resin may need to be cured in either case, for example in an autoclave. The fibres may be of carbon, glass, or other suitable materials. The resin is preferably epoxy.

### BRIEF DESCRIPTION OF THE DRAWINGS

Embodiments of the invention will now be described with reference to the accompanying drawings, in which:
Figure 1 illustrates a plan view of one end of a composite lay-up for a stringer in accordance with a first embodiment;
Figure 2 illustrates a side view of the lay-up of Figure 1;
Figure 3 illustrates a plan view of the lay-up of Figure 1 having a cover ply;
Figure 4 illustrates a projection of the lay-up and cover ply of Figure 3;
Figure 5 illustrates a close up of the stringer termination of Figure 4;
Figure 6 illustrates the cured, completed stringer of the first embodiment;
Figure 7 illustrates detail A of Figure 6;
Figure 8 illustrates a close up of the stack taper of Figure 7;
Figure 9 illustrates a side view of the stringer of Figure 6;
Figure 10 illustrates the section view on B-B of Figure 9;
Figure 11 illustrates an end view of the stringer of Figure 6;
Figure 12 illustrates a projection of the stringer of Figure 6;
Figure 13 illustrates a plan view of the stringer of Figure 6 showing rib feet locations;
Figure 14 illustrates a schematic view of the ply lay-up to form the stringer of the first embodiment;
Figure 15 illustrates a schematic view of the cured lay-up of Figure 14;

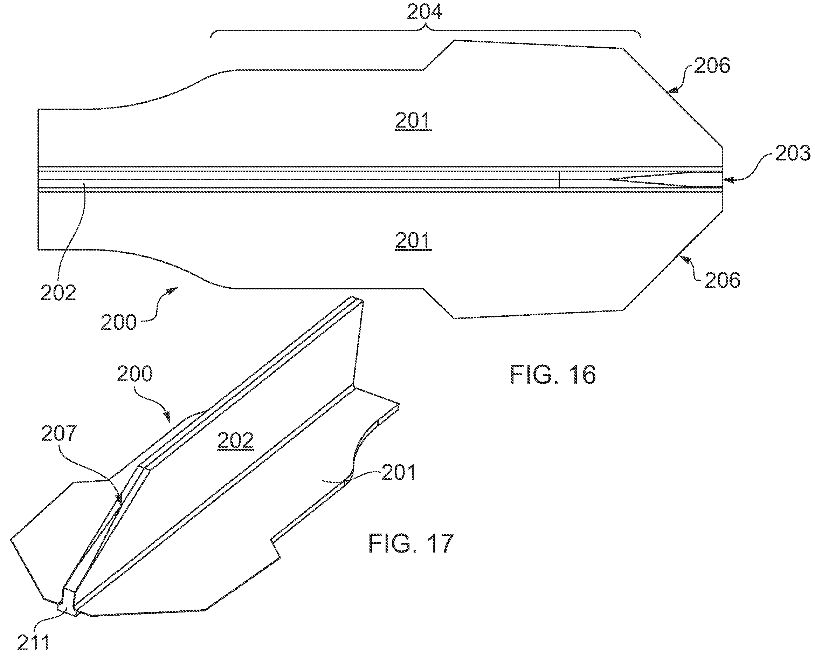

Figure 16 illustrates a plan view of a stringer in accordance with a second embodiment;
Figure 17 illustrates a projection of the stringer of Figure 16;
Figure 18 illustrates a projection from beneath of the stringer of Figure 16;
Figure 19 illustrates a schematic view of the ply lay-up to form the stringer of the second embodiment;
Figure 20 illustrates a schematic view of the cured lay-up of Figure 18;
Figure 21 illustrates a projection of a stringer in accordance with a third embodiment;
Figures 22 to 24 illustrate cut away views of the stringer of Figure 21 installed on a panel and having a pad covering the stringer foot; and
Figure 25 illustrates a schematic view of the stringer of Figure 21 installed on a panel and having an alternative pad covering the stringer foot, and showing the direction of load transfer from the stringer to the panel.

### DETAILED DESCRIPTION OF EMBODIMENTS

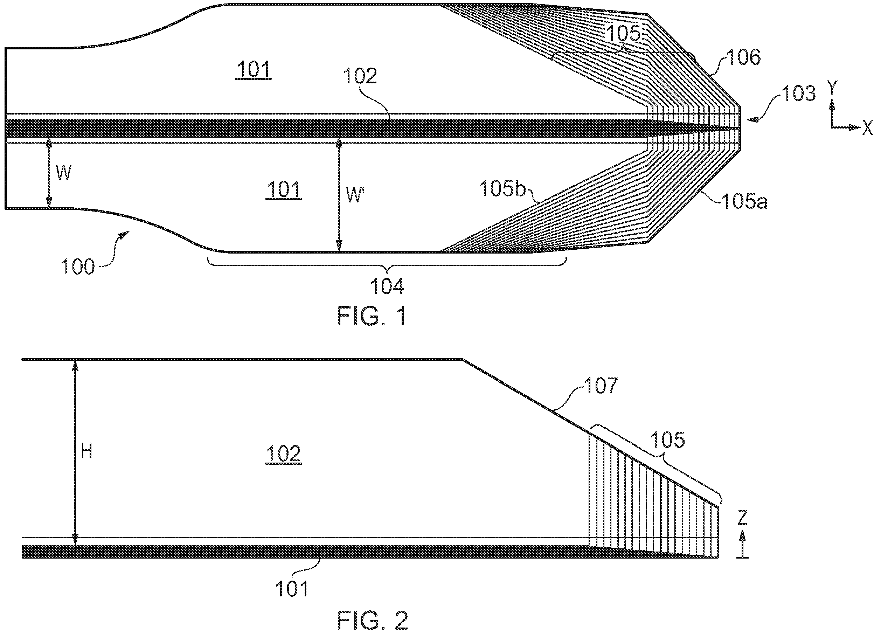

A first embodiment of a stringer in accordance with the present invention will now be described. As shown in Figure 1, the stringer 100 includes a flange 101 having a width W and an upstanding web 102 having a height H. Note that only one end of the stringer is shown in Figure 1. The stringer 100 has a termination 103 at one end. Inboard of the termination, the stringer 100 has substantially constant section (not shown in Figure 1). Adjacent to the termination 103, the flange 101 has a region of increased width W' so as to form a stringer foot 104. The stringer 100 is formed from a pair of back-to-back L-shaped stacks of composite laminate plies 105.

The plies 105 are arranged such that the lowermost ply 105a is the largest ply and the uppermost ply 105b is the smallest ply. The plies are cut such that the lowermost ply 105a terminates at the stringer termination 103, and the uppermost ply 105b terminates a significant distance inboard of the termination 103. The remaining plies 105 intermediate the plies 105a and 105b are cut consecutively so as to form a taper, or ramp, of decreasing ply stack thickness towards the termination 103.

As can be seen from Figure 1 the taper of decreasing ply stack thickness in the flange 101 is in both the longitudinal direction X and the transverse direction Y. As can be seen from Figure 2, the taper of reducing stack thickness in the flange 101 is also in the vertical direction Z. Furthermore, as can be seen from Figures 1 and 2, the taper of reducing stack thickness in the web 102 is in the transverse direction Y. Near the termination 103, the width W of the flange 101 also tapers, as does the height H of the upstanding web. The taper 106 in the width W of the flange 101 is set at approximately 45° to the longitudinal direction X. A second tapered region set at around 5° to the longitudinal direction X helps to blend between the taper 106 and the constant width section W' of the stringer foot 104. The taper 107 in the height H of the web 102 is set at approximately 30° to the horizontal. The stack of plies 105 is cut such that only the lowermost ply 105a remains at the termination 103.

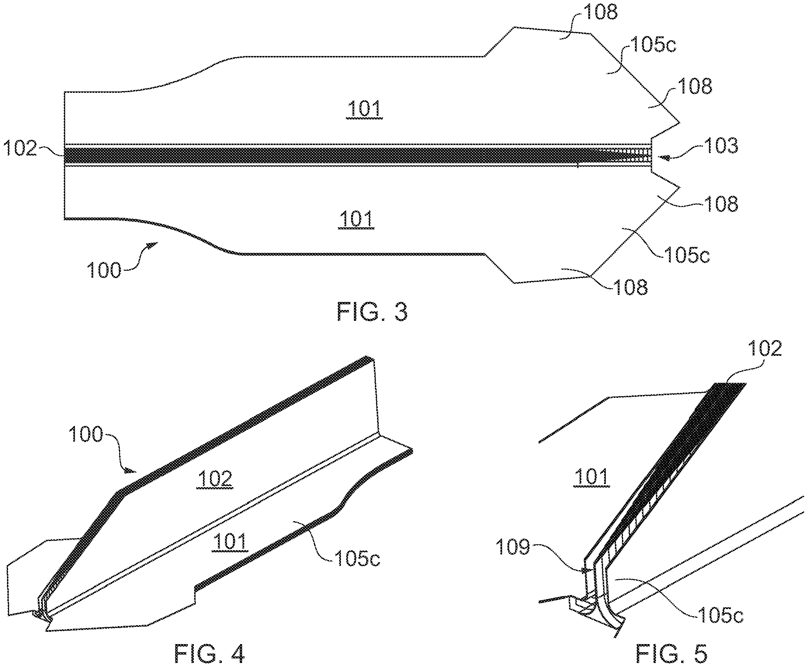

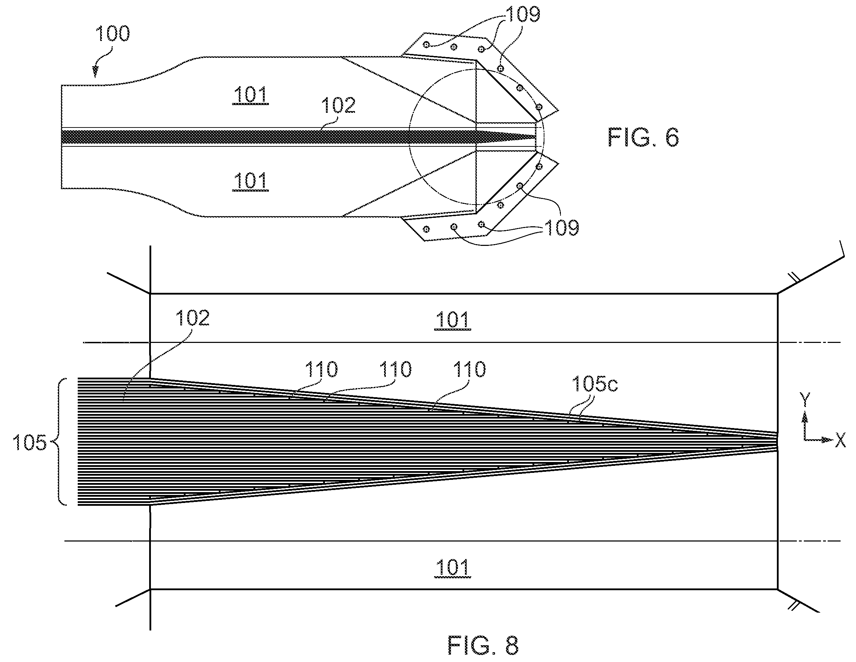

The exposed edges of the cut plies 105 in the tapers of reducing stack thickness in the flange 101 and web 102 can be susceptible to delamination. This can be overcome by providing a cover ply 105c over the uppermost ply 105b. The cover ply 105c is dimensioned so as to be at least as large as the lowermost ply 105a such that the cover ply 105c covers all of the other plies 105. As shown in Figure 3, the cover ply 105c further includes edge portions 108 which extend beyond the lowermost ply 105a. These edge portions 108 may be used to fasten the stringer 100 to a panel. It is to be noted that any such fasteners are non-structural and are provided only to prevent peeling of the cover ply 105c from the panel. Fastener holes 109 in the edge portions 108 are shown in Figure 6.

The cover ply 105c when applied over the stack of un-cured plies forms a gap at the termination due to the taper of reducing stack thickness in the other plies 105. This gap 109 is best seen in the close up view of Figure 5. When the lay-up of plies has been completed, curing the stringer 100 causes the cover ply 105c to conform to the taper of reducing stack thickness of the other plies 105 below.

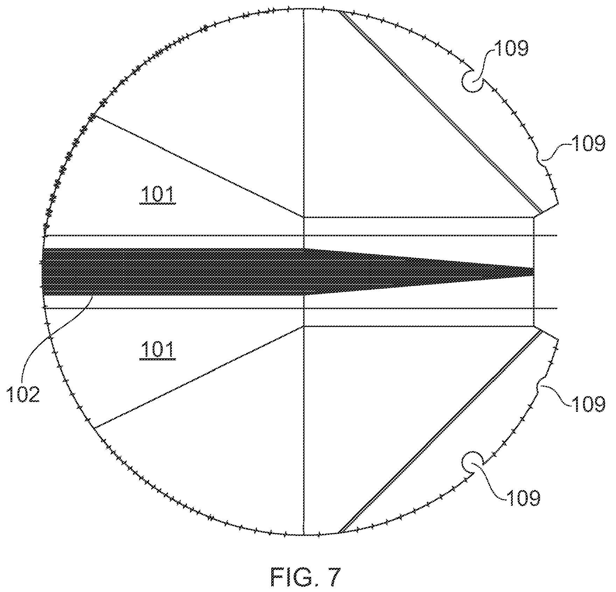

Figure 6 shows the completed stringer, after cure, where the cover ply 105c forms a continuous outer surface; Detail A of Figure 6 is shown in Figure 7; and a close up of the tapering stack of plies in the web 102 is shown in Figure 8. From Figure 8 it can be seen that the plies 105 are each parallel in the longitudinal direction X and by successively terminating the plies the thickness of the stack in the transverse direction Y reduces to form the taper. The cover ply 105c is, in fact, formed of two plies 105c. These cover plies 105c are not parallel to the longitudinal direction X in the taper, but instead conform to the angle of the taper. The small voids 110 between the edges of the cover plies 105c and the remaining plies 105 are filled with resin.

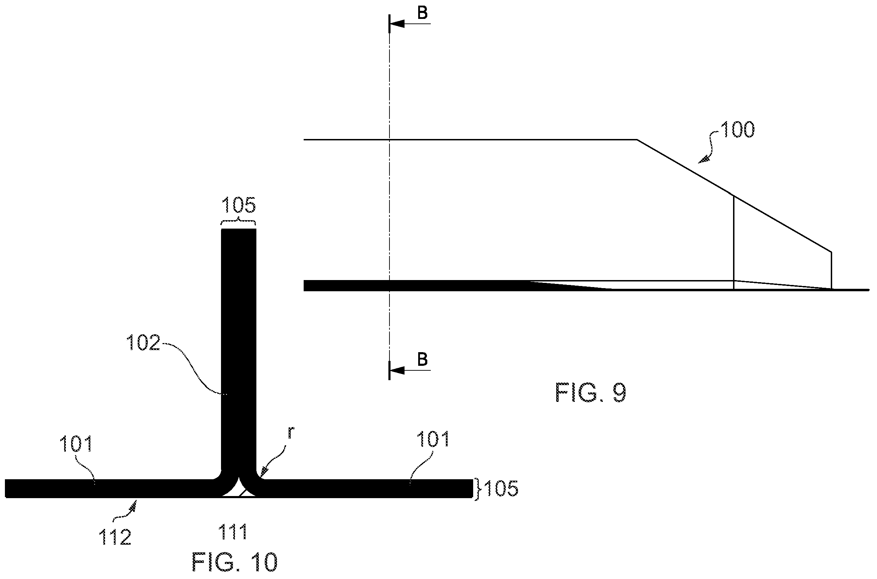

Figure 9 shows a side view of the stringer 100 and Figure 10 shows the section view on B-B. From Figure 10, the pair of back-to-back L-shaped stacks of composite plies 105 in the region of constant cross section on the stringer foot 104 can be seen. Each ply 105 is continuous such that the thickness of the web portion 102 is double the thickness of the flange portion 101. Due to the minimum radius r dictated by the laminate plies 105, a cleft may be formed between the back-to-back L-shaped stacks. This cleft may be filled with a non-structural filler 111 such that the lower surface 112 of the stringer 100 is substantially planar such that the stringer 100 may be securely bonded to a panel.

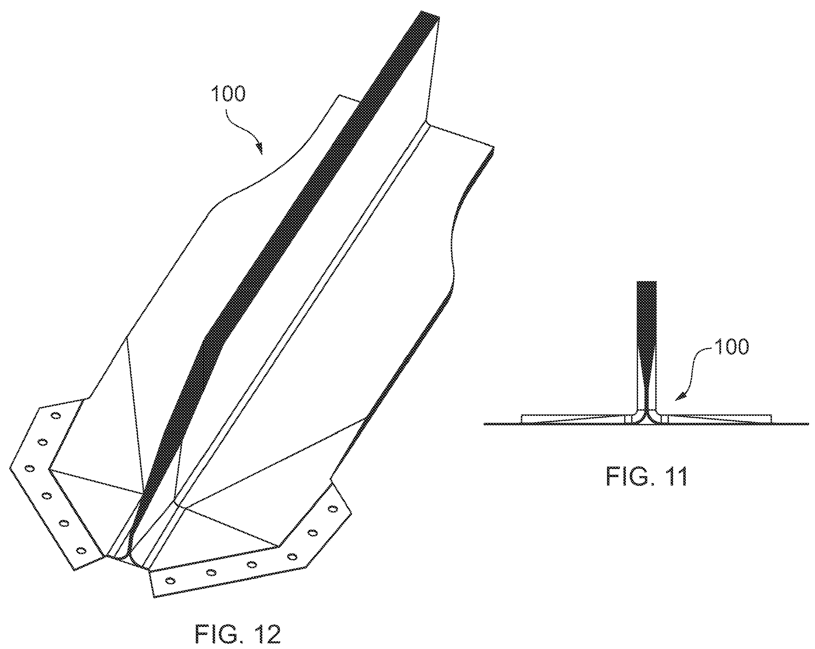

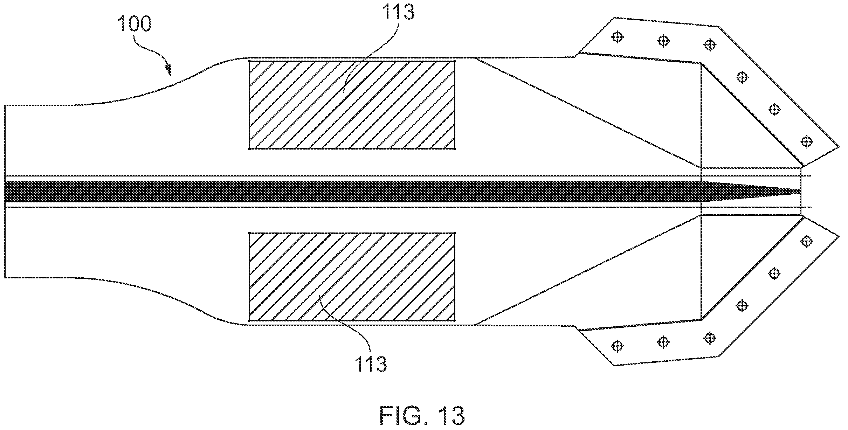

An end view of the stringer 100 is shown in Figure 11 and a projection view of the completed stringer 100 is shown in Figure 12. The stringer 100 is intended to be fixed to a cover, or skin, of an aircraft wing. Aircraft wings typically include ribs having cut-outs through which the stringers pass. The ribs are typically connected to the wing cover, or skin, and to the stringers by rib feet. Figure 13 shows locations 113 at which rib feet may be connected to the stringer 100.

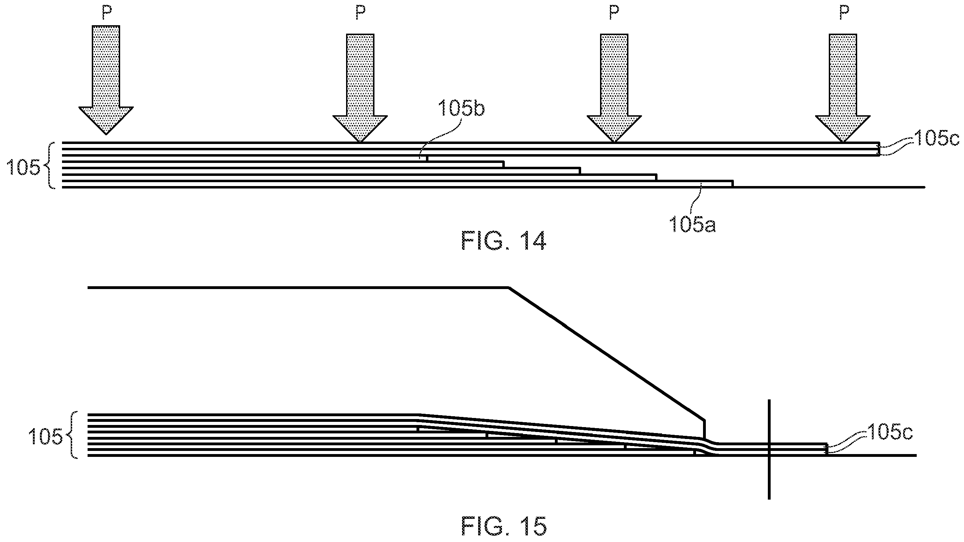

Figure 14 shows a schematic of the lay up of the plies. The plies between the lowermost ply 105a and the uppermost ply 105b form a stepped configuration in the taper of reducing ply stack thickness. The cover plies 105c extend beyond the lowermost ply 105a. The stack of plies is cured in an autoclave whereby applied heat and pressure P cause the cover plies 105c to conform to the taper geometry of the other plies 105. Figure 15 shows the cured plies upon removal from the autoclave.

In the first embodiment described above, the stringer 100 has a stack of plies having a taper of reducing stack thickness in various directions. A common feature of each of the tapers is that the internal plies are terminated consecutively towards the stringer termination to form the taper of reducing stack thickness. The exposed edges of the upper plies may be covered by the optional cover plies 105c in the completed stringer 100.

In a second embodiment, the stringer 200 has a similar overall geometry to that of the stringer 100. The primary difference between the stringer 200 of the second embodiment and the stringer 100 of the first embodiment is that in the stringer 200 the internal plies are terminated such that the edges of the plies are not exposed, even when the optional cover ply or plies are not used. The stringer 200 includes a flange 201, a web 202, a termination 203, a stringer foot 204, a taper 206 of reducing flange width towards the termination 203, a taper of reducing web height 207 towards the termination 203, and a non-structural tapered noodle 211. The outer geometry of the stringer 200 is similar to that of the stringer 100, with the exception that the web 202 has constant width up to the termination 203. This is achieved, despite a taper of reducing stack thickness in the longitudinal direction X of the web 202, by the tapered noodle 211.

The flange 201 and the web 202 are formed by joining two back-to-back L-shaped stacks of laminated composite structural plies, in a similar manner to the construction of the stringer 100.

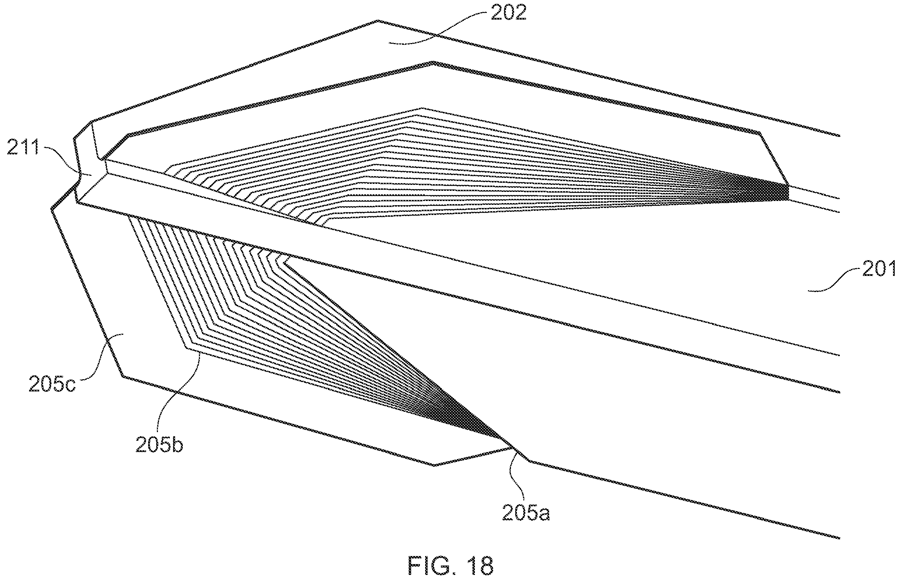

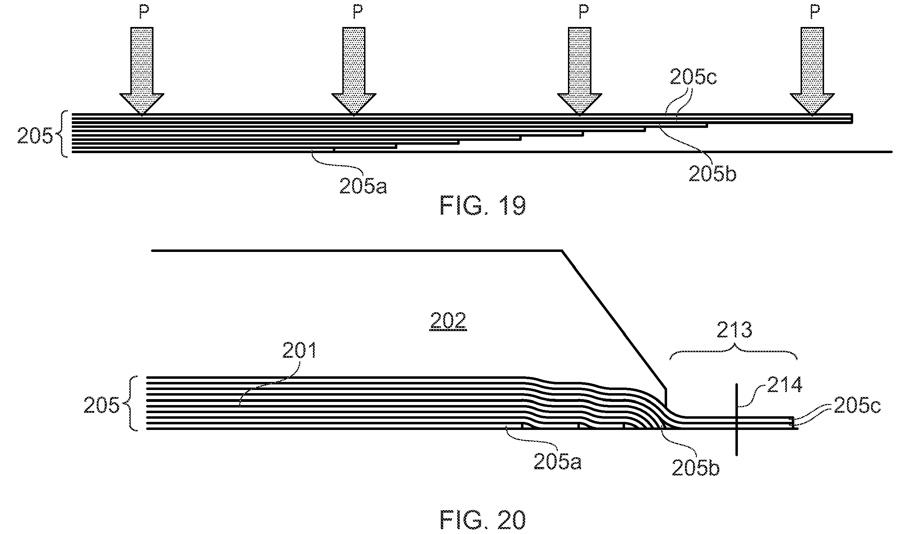

The key difference between the stringer 100 and the stringer 200 is best described with reference to Figures 18 to 20. For the stringer 200, the ply lay up is the reverse of that of the stringer 100. As can be seen in Figure 18, the plies 205 are laid up such that the smallest ply 205a is laid first and the largest ply 205b is laid last. Optional cover plies 205c may subsequently be laid over the ply 205b. With reference to Figure 19, the first ply 205a is laid up first. The uppermost ply 205b (or cover ply 205c) is laid last so as to form an overhang. The plies of the stringer 200 may be of the same material as those of the stringer 100. Once the stack of plies 205 has been assembled it is cured in an autoclave, or the like. Figure 20 shows a schematic partial section view of the plies 205 after cure. The uppermost ply 205b forms a generally smooth transition over the taper of reducing stack thickness towards the termination 203, as do the optional cover plies 205c. The internal plies naturally deform and their edges tend towards the normal to the inner mould line (the surface upon which the ply stack is laid).

In the schematic shown in Figure 20, the flange 201 includes an extended portion 213 beyond the extent of the web 202. This may be optionally provided for the stringer 200 where there is a risk of delamination of the flange 201 from the panel to which it is to be connected. The extended region 213 provides an increased bonding surface and may further be secured to the panel by a fastener, generally indicated by line 214.

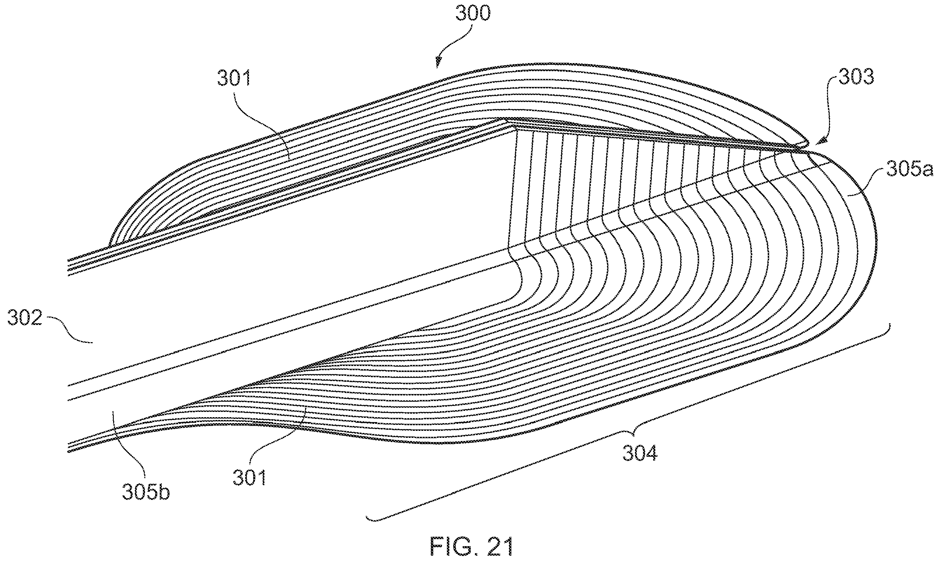

Figures 21 to 24 illustrate a third embodiment of a stringer 300. The stringer 300 includes a stack of plies 305 arranged in a similar manner to those of the stringer 100. That is to say, the lowermost ply 305a is the largest ply and the uppermost ply 305b is the smallest ply. The stringer foot 304 has a free-form construction of substantially continuous curved edges, in contrast with the angular cut edges of the plies 105 of the stringer 100. The shape of the stringer foot 304 has been optimised for load transfer into a panel to which the stringer 300 is to be attached. However, the curved edges of the plies 305 are more difficult to cut than the straight edges of the plies 105 and 205 of the stringers 100 and 200, respectively.

To improve bonding of the stringer foot 304 to a panel 350 a pad 370 is laid over the stringer foot 304. The pad 370 effectively acts as a region of increased panel thickness for the panel 350. The pad 370 has a generally semi-circular or D-shaped construction of substantially uniform thickness. The pad may be made of unidirectional or woven fibre composite material. The pad 370 may be pre-assembled and co-cured with the stringer 300 and the panel 350 to bond the stringer 300, the pad 370 and the panel 350 together. The prefabricated pad 370 may be laid over the stringer foot 304 in an automated process utilising a vacuum pad on a robotic arm for positioning the pad 370 with respect to the stringer 300.

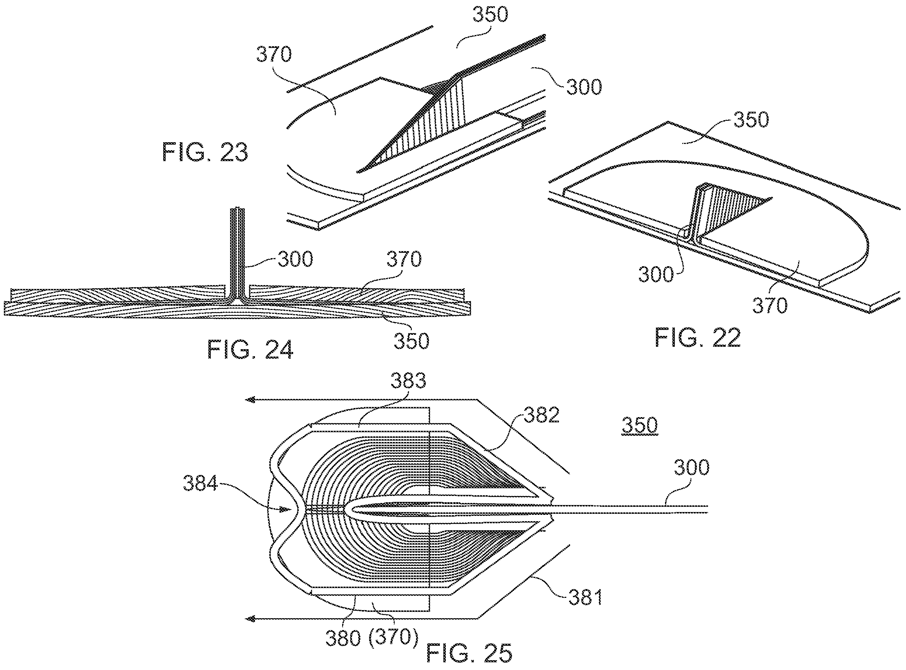

In a second example of the third embodiment, the pad 370 is replaced by a pad 380, as shown in Figure 25. The outline of the absent pad 370 is generally indicated by (370) in Figure 25. The shape of the pad 380 of the second example has been optimised to follow the load-line 381 of the load as it is transferred from the stringer 300 to the panel 350. The pad 380 is of substantially uniform thickness and has a divergent proximal end 382, a generally parallel sided mid-section 383, and a forked distal end 384. The shape of the pad 380 is more difficult to cut than the simple "D-shaped" pad 370, but provides improved load transfer between the stringer 300 and the panel 350.

Although the invention has been described above with reference to one or more preferred embodiments, it will be appreciated that various changes or modifications may be made without departing from the scope of the invention as defined in the appended claims.

## Claims

1. A laminated composite stringer (100, 200, 300) having a termination (103, 203, 303) at one end in its longitudinal direction, and including a laminated stack of composite structural plies (105, 205, 305), the ply stack having a taper of reducing stack thickness at the stringer termination (103, 203, 303), characteried in that the taper is provided by consecutively terminating the internal plies in the stack towards the stringer termination (103, 203, 303).

2. A stringer (100, 200, 300) according to claim 1 having a flange (101, 201, 301), wherein the stack taper is in the flange.

3. A stringer (100, 200, 300) according to claim 2, wherein the stack taper in the flange (101, 201, 301) is in the longitudinal and/or transverse direction.

4. A stringer (100, 200, 300) according to any preceding claim having an upstanding web (102, 202, 302), wherein the stack taper is in the web.

5. A stringer (100, 200, 300) according to claim 4, wherein the web (102, 202, 302) is bifurcated at the termination (103, 203, 303), and wherein a non-structural filler element is disposed in the bifurcated web.

6. A stringer (100, 200, 300) according to any preceding claim having a flange (101, 201, 301) and an upstanding web (102, 202, 302) formed by joining a pair of substantially L-shaped stacks of laminated composite structural plies (105, 205, 305) back-to-back.

7. A stringer (100, 200, 300) according to claim 4, wherein a non-structural filler element (111) is disposed in a cleft between the L-shaped stacks.

8. A stringer (100, 200, 300) according to any preceding claim, having an upstanding web (102, 202, 302), the web having a taper of reducing height at the termination (103, 203, 303).

9. A stringer (100, 200, 300) according to any preceding claim having a flange (101, 201, 301), wherein the flange has a taper of reducing width at the termination (103, 203, 303).

10. A stringer (100, 200, 300) according to any preceding claim having a flange (101, 201, 301), wherein the width (W) of the flange immediately inboard of the termination (103, 203, 303) is greater than the width of the flange further inboard of the termination (103, 203, 303).

11. A composite structure comprising a panel (350) and the stringer (300) of any preceding claim bonded to the panel (350).

12. A composite structure according to claim 11, wherein the taper of reducing stack thickness is achieved by terminating plies closest to the panel first.

13. A composite structure according to claim 11, wherein the taper of reducing stack thickness is achieved by terminating plies farthest from the panel first.

14. An aircraft comprising the composite structure of any of claims 11 to 13.

15. A method of manufacturing a laminated composite stringer (100, 200, 300) having a termination (103, 203, 30) at one end in its longitudinal direction, and including a laminated stack of composite structural plies (105, 205, 305), the method comprising:
cutting the composite structural plies to a desired termination profile; and
stacking the composite structural plies to form the laminated composite stringer, the play stack having a taper of reducing stack thickness at the termination (103, 203, 303), **characterised in that** the taper is provided by consecutively terminating the internal plies in the stack towards the stringer termination (103, 203, 303).

16. A method according to claim 15, wherein the plies are cut by a laser or a water jet.

17. A method according to claim 15 or 16, wherein individual plies are cut as they are added to the stack.

18. A method according to any of claims 15 to 17, wherein the largest plies of the completed stringer (100, 200, 300) are laid in the stack first.

19. A method according to any of claims 15 to 17, wherein the smallest plies of the completed stringer (100, 200, 300) are laid in the stack first.

20. A method according to any of claims 15 to 19, further comprising curing the stack of composite structural plies (105, 205, 305).

## Patentansprüche

1. Geschichteter Verbundmaterial-Stringer (100, 200, 300) mit einem Abschluss (103, 203, 303) an einem Ende in seiner Längsrichtung und enthaltend einen geschichteten Stapel von Verbundmaterialstrukturlagen (105, 205, 305), wobei der Lagenstapel eine Verjüngung von sich verringernder Stapeldicke am Stringerabschluss (103, 203, 303) aufweist, **dadurch gekennzeichnet, dass** die Verjüngung durch fortlaufenden Abschluss der Innenlagen im Stapel hin zum Stringerabschluss (103, 203, 303) bereitgestellt wird.

2. Stringer (100, 200, 300) nach Anspruch 1 mit einem Flansch (101, 201, 301), wobei die Stapelverjüngung im Flansch verläuft.

3. Stringer (100, 200, 300) nach Anspruch 2, wobei die Stapelverjüngung im Flansch (101, 201, 301) in der Längs- und/oder Querrichtung verläuft.

4. Stringer (100, 200, 300) nach einem der vorherigen Ansprüche mit einem aufrechten Steg (102, 202, 302), wobei die Stapelverjüngung im Steg verläuft.

5. Stringer (100, 200, 300) nach Anspruch 4, wobei der Steg (102, 202, 302) am Abschluss (103, 203, 303) gegabelt ist und wobei ein nichttragendes Füllelement im gegabelten Steg angeordnet ist.

6. Stringer (100, 200, 300) nach einem der vorherigen Ansprüche mit einem Flansch (101, 201, 301) und einem aufrechten Steg (102, 202, 302), gebildet durch Verbinden eines Paars im Wesentlichen L-förmiger Stapel von geschichteten Verbundmaterialstrukturlagen (105, 205, 305) Rücken an Rücken.

7. Stringer (100, 200, 300) nach Anspruch 4, wobei ein nichttragendes Füllelement (111) in einem Spalt zwischen den L-förmigen Stapeln angeordnet ist.

8. Stringer (100, 200, 300) nach einem der vorherigen Ansprüche mit einem aufrechten Steg (102, 202, 302), wobei der Steg am Abschluss (103, 203, 303) eine Verjüngung von sich verringernder Höhe aufweist.

9. Stringer (100, 200, 300) nach einem der vorherigen Ansprüche mit einem Flansch (101, 201, 301), wobei der Flansch am Abschluss (103, 203, 303) eine Verjüngung von sich verringernder Breite aufweist.

10. Stringer (100, 200, 300) nach einem der vorherigen Ansprüche mit einem Flansch (101, 201, 301), wobei die Breite (W) des Flansches unmittelbar bordseitig des Abschlusses (103, 203, 303) größer ist als die Breite des Flansches weiter bordseitig des Abschlusses (103, 203, 303).

11. Verbundmaterialstruktur, umfassend eine Platte (350) und den mit der Platte (350) verbunden Stringer (100, 200, 300) nach einem der vorherigen Ansprüche.

12. Verbundmaterialstruktur nach Anspruch 11, wobei die Verjüngung von sich verringernder Stapeldicke dadurch erreicht wird, dass zuerst der Platte nächste Lagen abgeschlossen werden.

13. Verbundmaterialstruktur nach Anspruch 11, wobei die Verjüngung von sich verringernder Stapeldicke dadurch erreicht wird, dass zuerst der Platte entfernteste Lagen abgeschlossen werden.

14. Flugzeug, umfassend die Verbundmaterialstruktur nach einem der Ansprüche 11 bis 13.

15. Verfahren zur Herstellung eines geschichteten Verbundmaterial-Stringers (100, 200, 300) mit einem Abschluss (103, 203, 303) an einem Ende in seiner Längsrichtung und enthaltend einen geschichteten Stapel von Verbundmaterialstrukturlagen (105, 205, 305), wobei das Verfahren umfasst:
Schneiden der Verbundmaterialstrukturlagen auf ein gewünschtes Abschlussprofil und
Stapeln der Verbundmaterialstrukturlagen, um den geschichteten Verbundmaterial-Stringer zu bilden, wobei der Lagenstapel eine Verjüngung von sich verringernder Stapeldicke am Abschluss (103, 203, 303) aufweist, **dadurch gekennzeichnet, dass** die Verjüngung durch fortlaufenden Abschluss der Innenlagen im Stapel hin zum Stringerabschluss (103, 203, 303) bereitgestellt wird.

16. Verfahren nach Anspruch 15, wobei die Lagen durch einen Laser oder einen Wasserstrahl geschnitten werden.

17. Verfahren nach Anspruch 15 oder 16, wobei einzelne Lagen geschnitten werden, wenn sie dem Stapel zugefügt werden.

18. Verfahren nach einem der Ansprüche 15 bis 17, wobei die größten Lagen des fertiggestellten Stringers (100, 200, 300) zuerst in den Stapel gelegt werden.

19. Verfahren nach einem der Ansprüche 15 bis 17, wobei die kleinsten Lagen des fertiggestellten Stringers (100, 200, 300) zuerst in den Stapel gelegt werden.

20. Verfahren nach einem der Ansprüche 15 bis 19, ferner umfassend das Aushärten des Stapels von Verbundmaterialstrukturlagen.

## Revendications

1. Lisse composite stratifiée (100, 200, 300) ayant une terminaison (103, 203, 303) au niveau d'une extrémité dans sa direction longitudinale, et comportant un empilement stratifié de plis structurels composites (105, 205, 305), l'empilement de plis ayant un effilement d'épaisseur d'empilement décroissante au niveau de la terminaison de lisse (103, 203, 303), **caractérisée en ce que** l'effilement est fourni en terminant consécutivement les plis internes dans l'empilement vers la terminaison de lisse (103, 203, 303).

2. Lisse (100, 200, 300) selon la revendication 1, ayant une bride (101, 201, 301), dans laquelle l'effilement d'empilement se trouve dans la bride.

3. Lisse (100, 200, 300) selon la revendication 2, dans laquelle l'effilement d'empilement dans la bride (101, 201, 301) se trouve dans la direction longitudinale et/ou transversale.

4. Lisse (100, 200, 300) selon l'une quelconque des revendications précédentes, ayant une âme droite (102, 202, 302), dans laquelle l'effilement d'empilement se trouve dans l'âme.

5. Lisse (100, 200, 300) selon la revendication 4, dans laquelle l'âme (102, 202, 302) est bifurquée au niveau de la terminaison (103, 203, 303), et dans laquelle un élément de remplissage non structurel est disposé dans l'âme bifurquée.

6. Lisse (100, 200, 300) selon l'une quelconque des revendications précédentes, ayant une bride (101, 201, 301) et une âme droite (102, 202, 302) formée en assemblant une paire d'empilements sensiblement en forme de L de plis structurels composites stratifiés (105, 205, 305) dos à dos.

7. Lisse (100, 200, 300) selon la revendication 4, dans laquelle un élément de remplissage non structurel (111) est disposé dans une fente entre les empilements en forme de L.

8. Lisse (100, 200, 300) selon l'une quelconque des revendications précédentes, ayant une âme droite (102, 202, 302), l'âme ayant un effilement de hauteur décroissante au niveau de la terminaison (103, 203, 303).

9. Lisse (100, 200, 300) selon l'une quelconque des revendications précédentes, ayant une bride (101, 201, 301), dans laquelle la bride a un effilement de largeur décroissante au niveau de la terminaison (103, 203, 303).

10. Lisse (100, 200, 300) selon l'une quelconque des revendications précédentes, ayant une bride (101, 201, 301), dans laquelle la largeur (W) de la bride immédiatement à l'intérieur de la terminaison (103, 203, 303) est supérieure à la largeur de la bride plus à l'intérieur de la terminaison (103, 203, 303).

11. Structure composite comprenant un panneau (350) et la lisse (300) de l'une quelconque des revendications précédentes collée au panneau (350).

12. Structure composite selon la revendication 11, dans laquelle l'effilement d'épaisseur d'empilement décroissante est obtenu en terminant des plis le plus près du panneau en premier.

13. Structure composite selon la revendication 11, dans laquelle l'effilement d'épaisseur d'empilement décroissante est obtenu en terminant des plis le plus loin du panneau en premier.

14. Aéronef comprenant la structure composite de l'une quelconque des revendications 11 à 13.

15. Procédé de fabrication d'une lisse composite stratifiée (100, 200, 300) ayant une terminaison (103, 203, 30) au niveau d'une extrémité dans sa direction longitudinale, et comportant un empilement stratifié de plis structurels composites (105, 205, 305), le procédé comprenant :
la coupe des plis structurels composites selon un profil de terminaison souhaité ; et
l'empilement des plis structurels composites pour former la lisse composite stratifiée, l'empilement de plis ayant un effilement d'épaisseur d'empilement décroissante au niveau de la terminaison (103, 203, 303), **caractérisé en ce que** l'effilement est fourni en terminant consécutivement les plis internes dans l'empilement vers la terminaison de lisse (103, 203, 303).

16. Procédé selon la revendication 15, dans lequel les plis sont coupés par un jet de laser ou d'eau.

17. Procédé selon la revendication 15 ou 16, dans lequel des plis individuels sont coupés lorsqu'ils sont ajoutés à l'empilement.

18. Procédé selon l'une quelconque des revendications 15 à 17, dans lequel les plis les plus grands de la lisse achevée (100, 200, 300) sont posés dans l'empilement en premier.

19. Procédé selon l'une quelconque des revendications 15 à 17, dans lequel les plis les plus petits de la lisse achevée (100, 200, 300) sont posés dans l'empilement en premier.

20. Procédé selon l'une quelconque des revendications 15 à 19, comprenant en outre le durcissement de l'empilement de plis structurels composites (105, 205, 305).
